# EUROPEAN PATENT SPECIFICATION

(11) **EP 0 421 800 B1**
(45) Date of publication and mention of the grant of the patent: **06.09.1995**
(21) Application number: 90310906.4
(22) Date of filing: 04.10.1990
(51) Int. Cl.: B29C 70/48, B29C 33/20

(54) **Resin transfer moulding equipment and method**
"RTM"-Verarbeitungsanlage und Verfahren
Equipment et procédé "RTM"

(30) Priority: 06.10.1989 GB 8922584
(43) Date of publication of application: 10.04.1991
(73) Proprietor: FORD MOTOR COMPANY LIMITED, Brentwood Essex (GB); FORD FRANCE S. A., 92506 Rueil-Malmaison Cédex (FR); FORD MOTOR COMPANY, Dearborn, MI 48120 (US); FORD-WERKE AKTIENGESELLSCHAFT, 50725 Köln (DE)
(72) Inventor: Kendall, Kenneth Neil, Beeston, Nottingham (GB); Middleton, Victor, Risley, Derbyshire, DE7 3ST (GB); Owen, Michael John, Nottingham, NG9 3BE (GB); Rudd, Christopher Doublas, Lenton Abbey, Nottingham, NG9 2SX (GB)
(74) Representative: Messulam, Alec Moses

(56) References cited:
- EP-A- 0 285 046
- GB-A- 2 025 310
- US-A- 3 956 058

## Description

### Field of the Invention

This invention relates to moulding equipment, according to the preamble of claim 1 and to a method of operating equipment according to the preamble of claim 6.

### Description of prior art

In many moulding processes, a mould cavity is formed from two separable mould halves. Plastics material is introduced into the mould cavity and allowed to cure. The two mould halves are then separated to allow removal of the cured moulding. In resin transfer moulding, a dry preform of fibrous material, such as glass fibre, is first loaded into the mould cavity and liquid thermosetting resin is used to impregnate the preform and to form the final product.

GB-A-135746 discloses equipment for producing fibreglass mouldings in which a pair of dies are held in a desired relative position so as to define a moulding cavity by means of steel frames which give rigidity to the dies. A mat of fibreglass is loaded into the mould cavity, the dies are clamped together and resin is injected into the cavity through an injection socket positioned centrally in one of the dies. Resin is supplied from a tank which may be mounted on a trolley or carriage for movement from mould to mould to facilitate line production. Each mould is custom-built for each product, and, being separated from the resin injection system is unsuitable for high speed production.

US-A-3380117 and US-A-3473196 disclose automatic moulding machines in which two mould halves are mounted in a frame for movement vertically into and out of a closed position in which they define a mould cavity into which moulding material may be introduced from a transfer system mounted on the machine. A hydraulic cylinder is used to lower the upper mould half, and pressure in the cylinder maintains the two mould halves in contact during the moulding operation.

GB-2158389 and GB-2064415 disclose moulding equipment in which the two mould halves are mounted on platens that are slidable horizontally on a frame towards and away from a closed position by means of hydraulic cylinders. The platens carry clamps for locking the two mould halves together in the closed position. In the equipment disclosed in GB-2158389, actuation of the clamps increases the closing forces between the two mould halves.

More particularly, EP-A-285046 discloses a device cf. the preamble of claim 1 and a method cf. the preamble of claim 6 for use in the production of a trough-shaped item, which device comprises a frame in which mould halves are moulded. Means are provided for moving the moulds into and out of a closed position defining a mould cavity into which resin may be introduced. Means are also provided for clamping the mould halves together in the closed position and include clips and pawls which require the cooperative action of the means for moving the mould halves including supplementary means comprising adjustable compression bodies. The clamping of the mould halves together requires a complex sequence of operations and the system is dependant upon the means for moving the mould halves being engaged when the clamping means is engaged.

### Summary of the invention

According to the present invention, moulding equipment comprising a frame (1a-d, 6a-d), first and second mould halves (8,12) mounted in the frame, means (50a-d) for moving the mould halves (8,12) into and out of a closed position in which they define a mould cavity into which resin may be introduced, and means (80) for clamping the mould halves together in the closed position, characterised in that the equipment further comprises disengagement means (14,46) adapted to disengage the mould halves (8,12) from said means (50a-d) when the clamping means (80) is engaged.

The invention also comprises a method of operating moulding equipment as disclosed in claim 6.

By separating the operation of the clamping means from the means for moving the mould halves, the means for moving the mould halves offers no resistance to the clamping means, thereby facilitating an accurate alignment of the mould halves in their closed position.

Preferably, the means for moving the mould halves comprises at least one lifting jack moveable into engagement with the second mould half to raise it relative to the first mould half. Where a plurality of lifting jacks are used, a drive mechanism is preferably included for transferring movement from one lifting jack to the other lifting jack or jacks. The lifting jacks facilitate the separation of the mould halves, and the drive mechanism ensures that the separation occurs evenly, which also contributes to a reduction in cycle time for the moulding process.

The frame preferably comprises a plurality of upright pillars on each of which is mounted a carriage capable of travelling along the pillar, and each carriage is connected to the second mould and to a respective one of the lifting jacks. With such a construction, the drive mechanism preferably comprises chain drives mounted on the frame and interconnecting the carriages.

In the preferred embodiment of the invention, each mould half comprises a shell defining a mould surface and a support for the shell, the support being sufficiently rigid to prevent deformation of the shell during the moulding process. Preferably, the shells are removably mounted on the supports so that the same equipment can be used to produce different mouldings simply by interchanging the shells. In order to accommodate shells of different sizes, the first mould half may be mounted on one or more stands the height of which is adjustable. Alternatively, the first mould half may be mounted for movement out of the frame, for example on rollers, for replacement by another mould half carrying a different shell.

The shells of at least one mould half, and preferably both, may comprise means for heating the mould surface, for example in the form of a plurality of heating elements and means for controlling individually the temperatures of the heating elements.

### Brief description of the drawings

A preferred embodiment of the invention will now be described, by way of example only, with reference to the accompanying drawings, in which:-
Figure 1 is a front elevation of resin transfer moulding equipment in accordance with the invention;
Figure 2 is a side elevation of the equipment of Figure 1 in the direction of the arrow X;

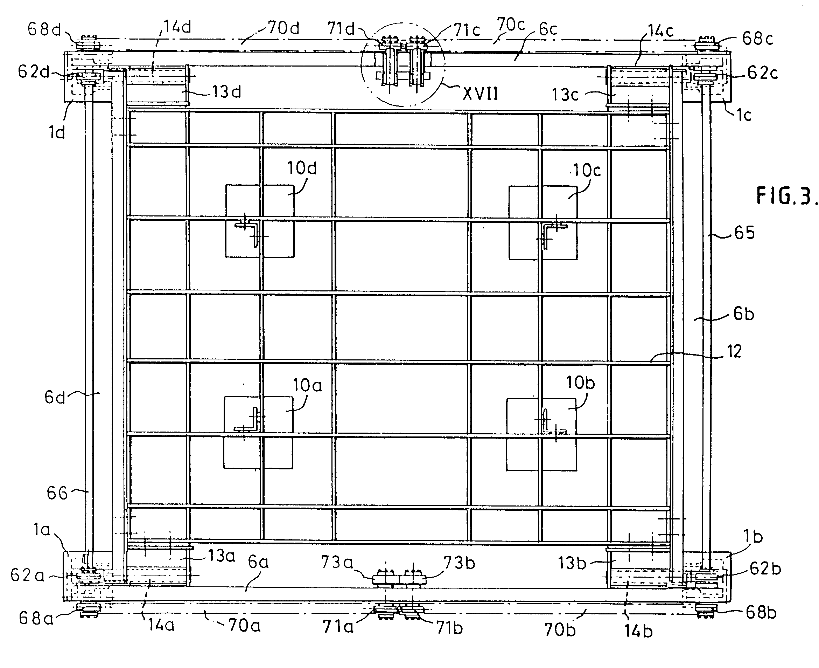

Figure 3 is a plan of the equipment of Figures 1 and 2;
Figure 4 is a plan of a mould shell incorporated in the equipment of Figures 1 to 3;
Figure 5 is a partial cross-section of the mould shell of Figure 4, taken along the line V-V;
Figure 6 is a plan of the opposite surface of the mould shell of Figure 4;
Figure 7 is a cross-section through the mould shell taken along line VII-VII of Figure 6;
Figure 8 is a plan of one side of another mould shell incorporated in the equipment of Figures 1 to 3;
Figure 9 is a cross-section through the mould shell of Figure 8, taken along line IX-IX of Figure 8;
Figure 12 is a cross-section of a carriage forming part of the equipment if Figures 1 to 3;
Figure 13 is a cross-section of the carriage of Figure 4, taken along line XIII-XIII;
Figure 14 is a cross-section through part of the equipment of Figures 1 to 3, taken along line XIV-XIV in Figure 2;
Figure 15 is a cross-section taken along line XV-XV of Figure 14;
Figure 16 is a cross-section through part of the equipment of Figures 1 to 3, taken along line XV-XV of Figure 2;
Figure 17 is a plan, on an enlarged scale, of the part of the equipment in the circle XVIII in Figure 3;
Figure 18 is a partial cross-section through a carriage latch mechanism employed in the equipment shown in Figure 1;
Figure 19 is a cross-section along the line XIX of Figure 21;
Figure 20 is a diagram illustrating a heating system for the mould shells of Figures 4 to 9; and
Figure 21 is an elevation of clamp used in the equipment of Figure 1;

### Detailed description of preferred embodiment

Referring to the drawings, resin transfer moulding equipment comprises a frame defined by four hollow rolled steel upright pillars 1a-d of rectangular cross-section secured at their feet to a concrete bed 5 and bolted at their upper ends to an H-frame composed of four hollow rolled steel cross-members 6a-d.

A first mould half 8 is fixed to the bed 5 by four stands 10a-d. Each stand comprises two X-section beams bolted together and upright L-section locating element mounted on the top of each of the upper beams 10. The height of the first mould half 8 above the bed 5 can be adjusted by removing one or both the beams in each stand, or by inserting shims (not shown) between the stands and the first mould half 8.

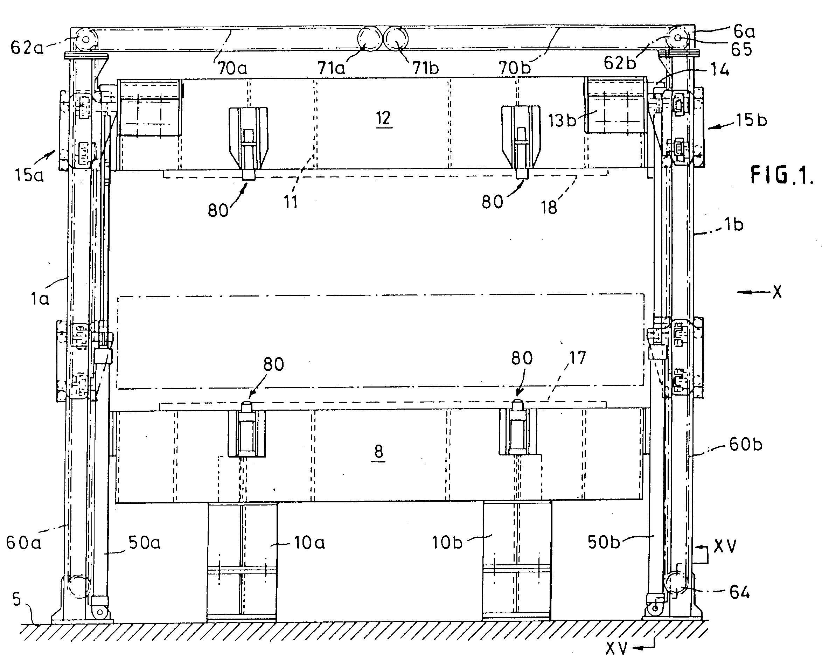

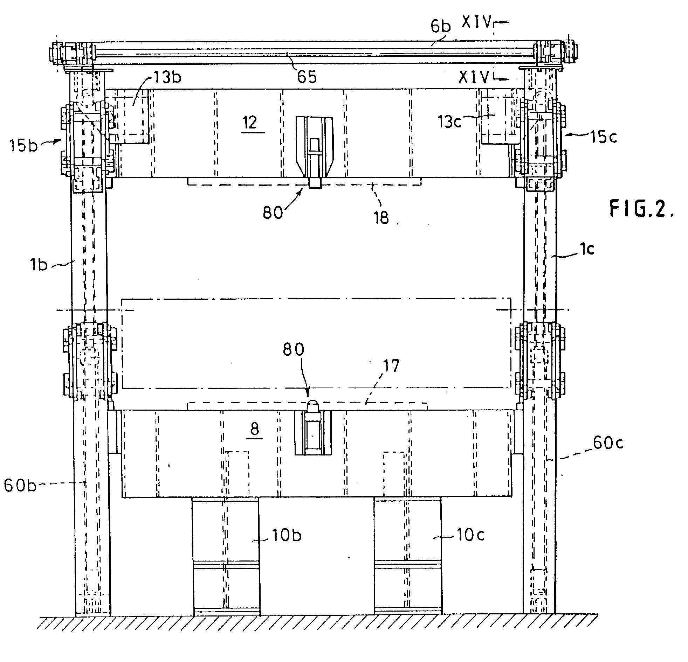

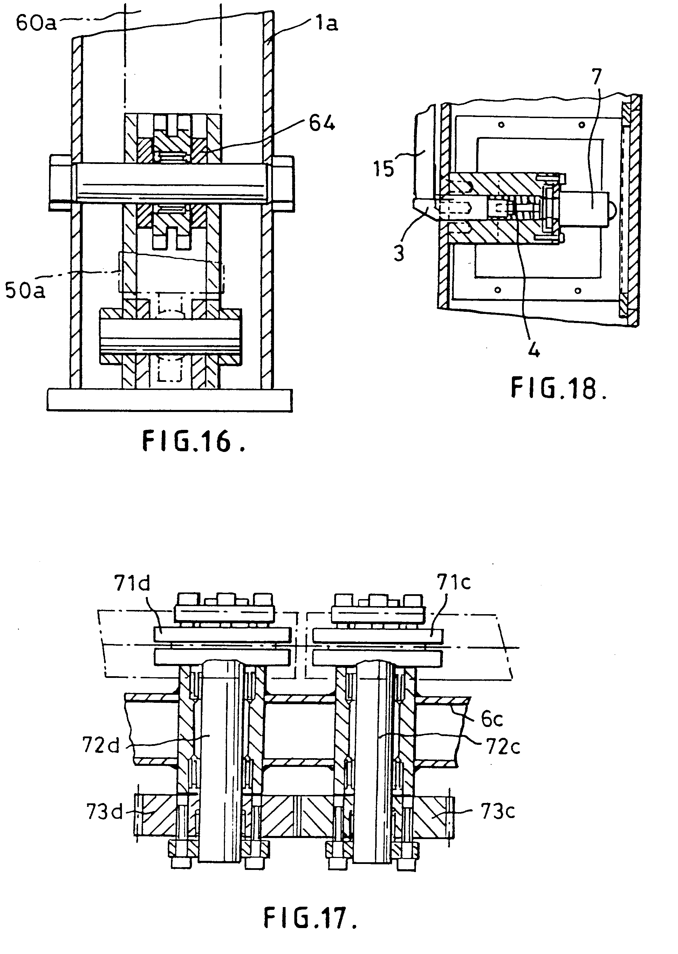

A second mould half 12 is housed within the frame for vertical movement towards and away from the first mould half, as indicated by solid and broken lines in Figures 1 and 2. Each corner of the second mould half 12 carries a mounting bracket 13a-d. Carriage pins 14a-d project laterally from each bracket and rest in a respective one of four carriages 15a-d, each of which can travel up and down the pillars 1a-d. Each carriage is retained in its raised position by a latch mechanism, one of which is illustrated in detail in Figure 18, comprising a bolt 3 mounted within the upright pillar 1 for movement between an extended position, in which it projects through an aperture in the pillar 1 to engage the lower edge of the carriage 15, and a retracted position. The bolt 3 is biased into the extended position by a spring 4, and may be retracted by a pneumatic cylinder 7. The lower leading edge of the bolt 3 is chamfered so that upward movement of the carriage 15 past the bolt drives the bolt into the retracted position.

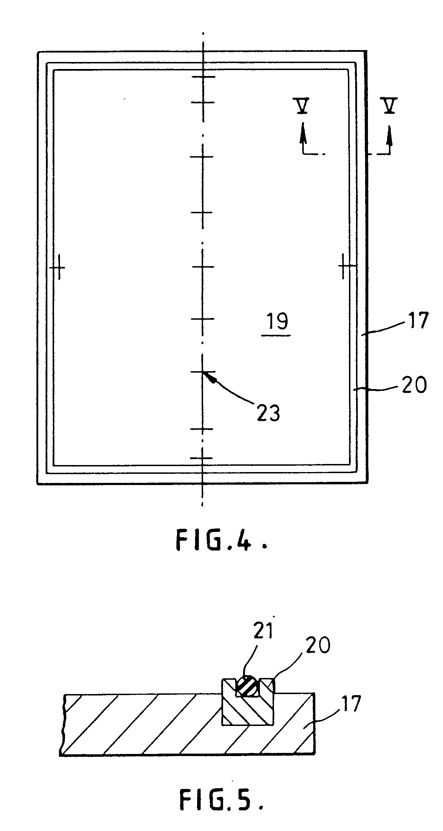

The two mould halves 8,12 are of similar construction, each comprising a series of vertical metal plates arranged in a rectangular grid which forms a rigid support 9,11 for a shell 17,18, which are illustrated in more detail in Figures 4 to 9.

The shell 17 of the first mould half is illustrated in Figures 4 to 7. In the embodiment illustrated, the shell is a rectangular plaque mould suitable for producing flat panels of fibre-reinforced plastics material measuring 4 mm x 100 cm x 150 cm. Other configurations of shell can of course be used to produce articles of different shapes. Non-planar shells would be mounted on a supporting structure preferably in the form of a frame complementary in shape to the reverse face of the shell, and secured to the support 9,11.

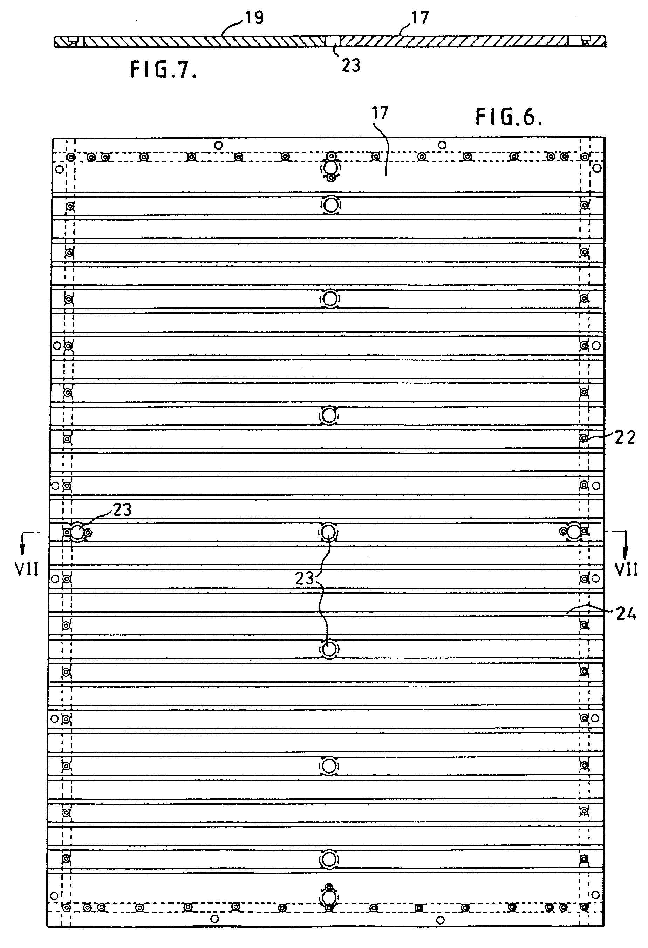

The shell 17 has a chromium-plated upper moulding surface 19 and a peripheral rectangular recesses or gallery for receiving a spacer element 20, and a seal 21, as best seen in Figure 5. The peripheral recess is provided with apertures 22 (see Figure 6) through the shell at regular intervals, and the spacer and seal 20,21 are configured to expose one or more of the apertures to permit venting of the mould in use. Further apertures 23,23 along the centre lines of the shell 17 are provided for the injection of resin into the mould or for measuring instruments, such as thermocouples or transducers. The rear surface of the shell 17 is provided with a series of parallel grooves 24 each of which receives a tubular heating element (not shown) through which the heated fluid, such as oil, at a predetermined temperature can be passed. The heating elements are secured in the recesses by a heat-conducting adhesive, such as an aluminium-filled epoxy resin. The flow of heating or cooling fluid through the heating elements can be controlled so that any required temperature gradient can be established across the shell.

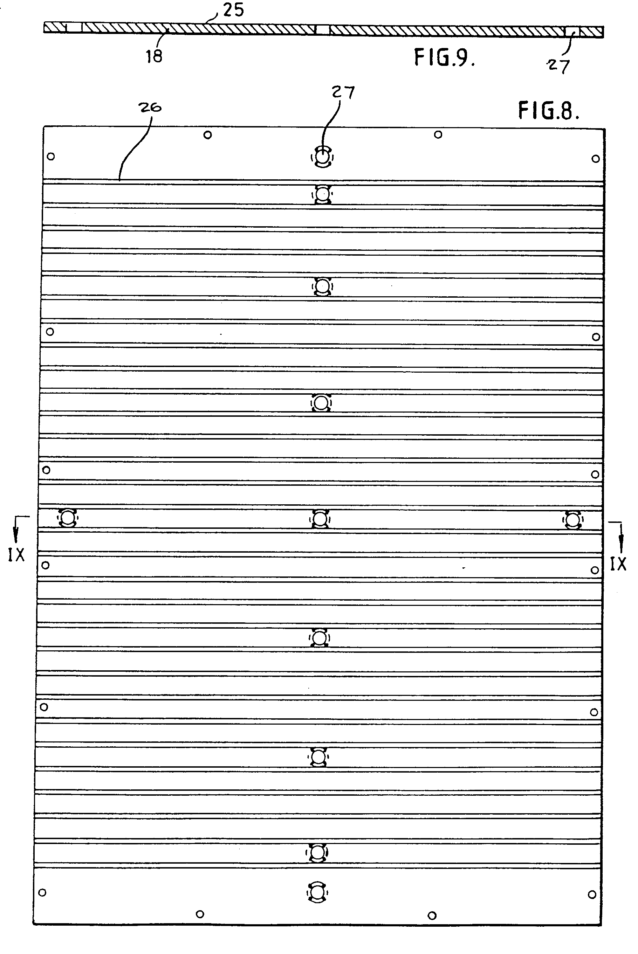

The shell 18 for the second mould half 12 is illustrated in Figures 8 and 9. This shell is also a rectangular plaque mould having a plane chromium-plated lower moulding surface 25 and a rear surface having parallel recesses 26 for tubular heating elements. A series of apertures 27 arranged on the lateral and longitudinal centre line of the shell are provided for the injection of resin. Sensors such as thermocouples and pressure transducers (not shown) may be attached to the shells to enable the progress of the injection process to be monitored. Both shells 17,18 are provided with bolt holes to permit the shells to be bolted to the supports.

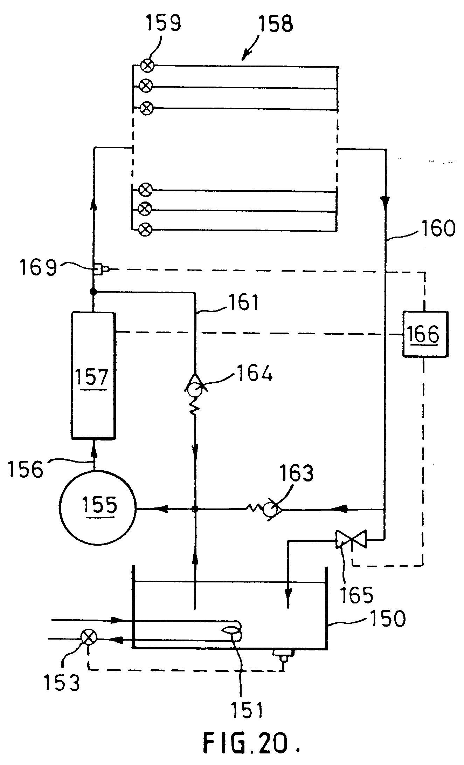

The heating system for the shells 17 is illustrated in more detail in Figure 20. A similar system is provided for the other shell 18. As illustrated in Figure 20, oil is held in a reservoir 150 which contains a heat exchange element 151 through which cooling water can be circulated. The flow of water through the heat exchange element is regulated by a thermostatically-controlled valve 153.

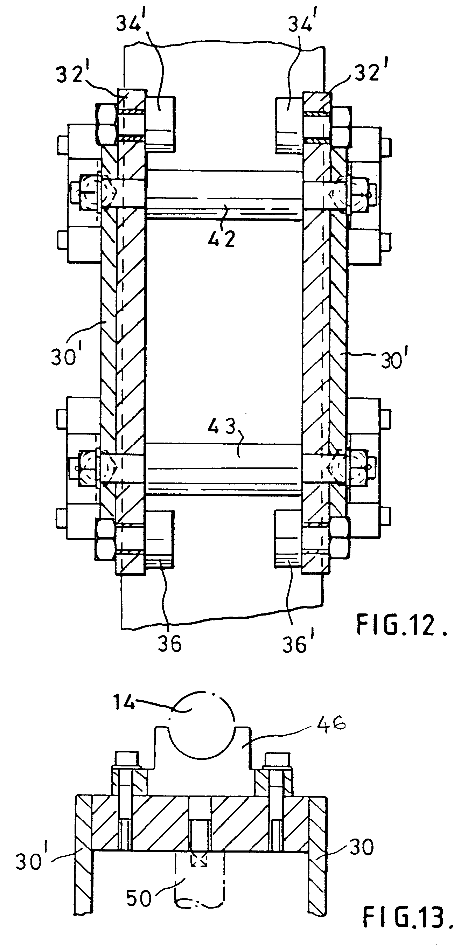

Oil is pumped from the reservoir by a pump 155 along a supply line 156 over an electrically-operated immersion heater 157 and into the array of heating elements 158 in the shell 17. Each element may be opened and closed by a valve 159 so that a desired temperature gradient may be established across the mould surface. Oil emerging from the heating elements is returned to the pump for recirculation along a return line 160, excess oil being returned via a pump relief line 161. Both the return line 160 and the pump relief line 161 contain check valves 163,164. Hot oil may be returned to the reservoir from the return line through a cooling valve 165. The cooling valve is opened and closed by an electronic temperature controller 166, operable in response to a thermostat 169 in the supply line immediately downstream of the heater 157. The temperature controller 166 also controls the heater 157 so that the temperature of the oil circulating in the system is either increased, by switching on the heater 157, or decreased by returning hot oil to the reservoir through the valve 165. The carriages 15a-d are of similar construction, which is illustrated in detail in Figure 12. Each carriage comprises two parallel side plates 30,30' disposed on two opposite sides of the upright pillar 1 along which it travels. Each plate carries two bearing plates 32,32' each of which overlies one of the other two sides of the pillar 1 so that the side plates and bearing plates embrace opposite sides of the pillar. The bearing plates 32,32' each carry an upper roller 34,34' and a lower roller 36,36', which guide the carriage 15 along the pillar. Further guidance for the carriage is provided by two further vertically-spaced rollers mounted in bearing blocks on each of the side plates 30.

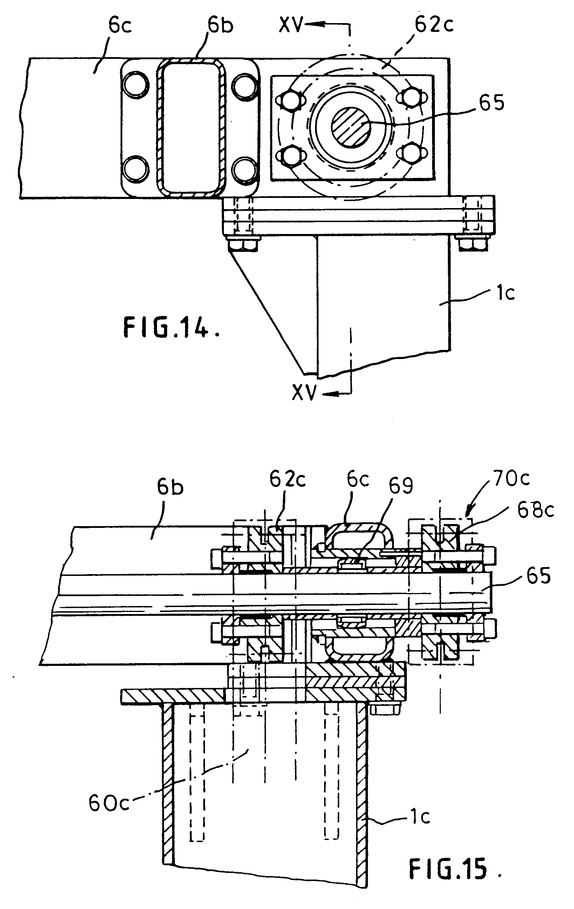

The side plates 30 are bolted to upper and lower spacer bars 42,43 (Figure 12) on one side of the pillar, and to upper and lower anchor blocks on the other side of the pillar. The inwardly-facing edges of the side plates 30 are also bolted to a bracket 46 (Figure 13) which is provided with a semi-circular recess for receiving one of the carriage pins 14 on the second mould half 12. Each carriage 15a-d may be moved along the upright pillar 1 by one of four lifting jacks 50a-d of similar construction. The lower end of each jack is pivotally connected to the foot of the pillar 1 (as illustrated in detail with respect to one jack 50a in Figure 15), the upper end of each jack is bolted to the bottom of the bracket 46 on the carriage 15. All four lifting jacks 50a-d are operable hydraulically from a conventional hydraulic control system (not illustrated).

In order to ensure that the four carriages always move in unison, even in the event of failure of one of the jacks, the carriages 15a-d are interconnected by a drive mechanism which transfers the movement of one lifting jack to the others. The drive mechanism comprises four drive chains 60a-d indicated in broken lines in the drawings. Each drive chain 60a-d is connected at each end to the upper and lower anchor blocks 44,45 of one of the carriages 15a-d.

Each drive chain 60a-d passes upwardly alongside one of the upright pillars 1a-d, over one of four first gear wheels 62a-d mounted in adjustable bearings on top of the pillars 1a-d (illustrated in detail in Figures 14 and 15), down the hollow interior of the pillar, around an idler wheel 64 mounted for rotation in the foot of the pillar 1 (illustrated in detail in Figure 16), through an aperture in the foot of the pillar and upwardly alongside the inner wall of the pillar to the lower anchor block 46 on the carriage 15. Adjustment of the bearings of the gear wheels 62a-d sets the tension in the chains 60a-d to a required level.

The four first gear wheels 62a-d are coupled together in pairs by two drive shafts 65,66 (Figures 1 and 2) mounted in self-aligning bearings 69 (Figure 15) adjacent the cross members 6b and 6d and extending along opposite sides of the frame. The ends of the drive shafts 65,66 carry second gear wheels 68a-d. Each of the second gear wheels is connected by a drive chains 70a-d to one of four transfer wheels 71a-d (illustrated in detail in Figure 17) which are fixed to shafts 72a-d mounted for rotation in needle bearings towards the centres of the front and rear cross members 6a and 6d. The inner ends of the shafts 72a-d carry gear wheels 73a-d which mesh with the gear wheel on the adjacent drive shaft. As a result, the movement of any one jack 50a-d is transmitted to all four carriages.

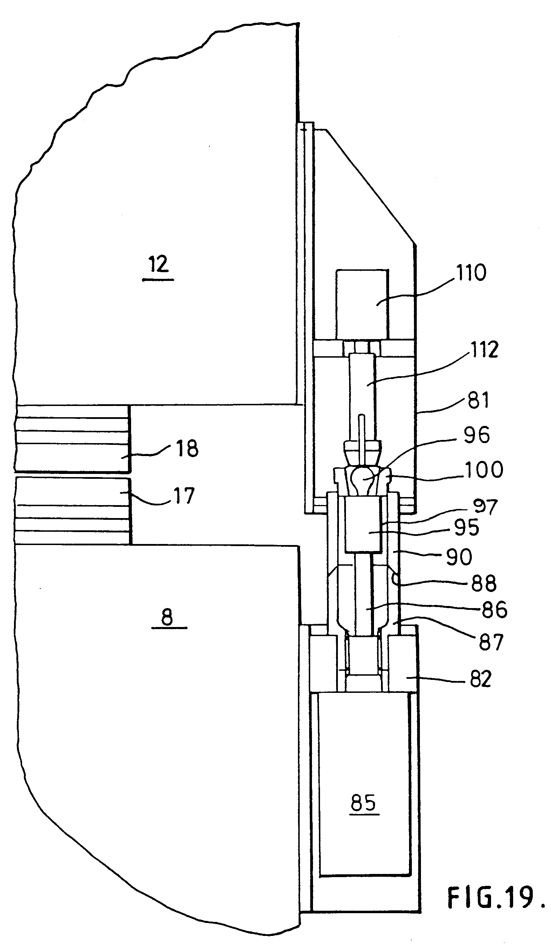

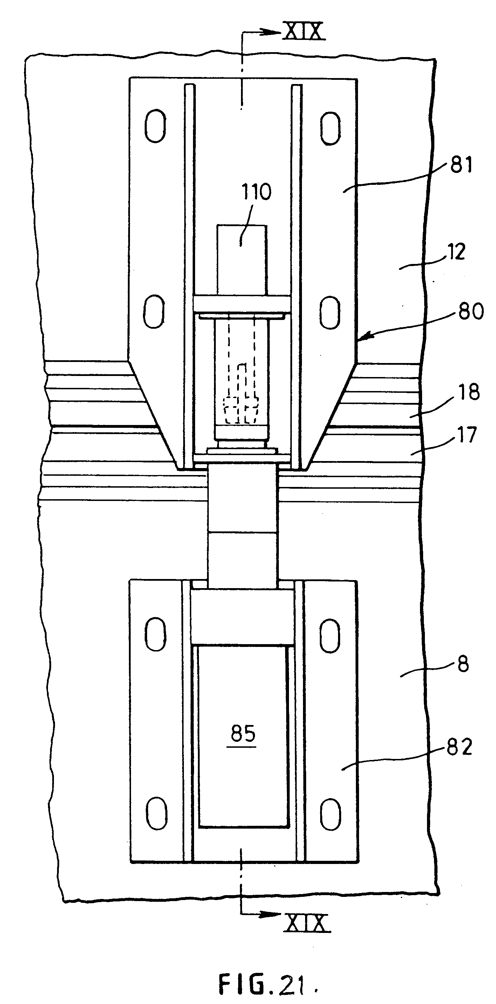

The upper and lower mould halves 12 and 18 may be clamped together in their closed position by six clamps 80, two of which are mounted on each of the longer sides of the mould halves, one further clamp being mounted on each of the shorter sides of the mould halves, as illustrated in Figures 1 and 2. One clamp 80 is illustrated in more detail in Figures 19 and 21.

Referring to Figures 19 and 21, the clamp comprises an upper part 81 and a lower part 82 bolted to the upper and lower mould halves 12,8 respectively. The lower part 82 comprises an hydraulic cylinder 85 from which a piston rod 86 projects vertically upwardly through a hollow cylindrical seat 87, which has a conical upper surface 88. In the closed position of the mould halves illustrated, the upper surface of the seat 87 is received within a collar 90 secured to the upper part 81 of the clamp. The lower surface of the collar 90 has a conical surface complementary to the upper surface of the seat 87 so that, as the mould halves close, the two parts of the clamp are guided into alignment.

The upper end of the piston rod 86 carries a dolly 95 having a spherical head 96 and a cylindrical body 97. When the piston rod 86 is fully extended, as illustrated in Figures 19 and 21, the head 96 extends into a locking ring 100 which rests on the upper part of the body 97. The locking ring can slide partially into the upper end of the collar 90 until a shoulder formed on the external surface of the locking ring engages the upper edge of the collar 90. The internal surface of the locking ring is tapered to form a conical seat.

The upper part 81 of the clamp carries a pneumatic cylinder 110 having a piston rod that carries a collet 112. The lower end of the collet 112 is tapered externally to match the seat formed by the internal surface of the locking ring 100, and has a spherical internal recess for receiving the head of the dolly 95. Four axial slots in the end of the collet allow the collet to expand whilst the head 96 of the dolly is inserted into the collet 112.

In use, the shells 17,18 are bolted to their respective supports and, depending upon the nature of the resin to be used in the moulding process, heated to an operating temperature. With the second mould half 12 in its raised position, a preform of fibrous reinforcing material is loaded into the shell 17b of the first mould half. The pneumatic cylinders 7 of the latch mechanisms for the carriages 15a-d are then operated to retract the bolts 7, and the lifting jacks are operated to lower the carriages and the second mould half 12 so that the moulding surface 25 of the shell of the second mould half contacts the spacers and seals 20,21 of the shell 17 on the lower mould half.

The seats 87 of the clamps 80 engage with their respective collars 90 and align the two mould halves accurately.

Continued downward movement of the carriages causes the brackets 46 to disengage from the carriage pins 14. After the brackets 46 have disengaged from the pins 14, the clamps 80 are actuated. In each clamp, the hydraulic cylinder 85 is initially actuated to extend the dolly 95. When the mould halves 12,8 are closed, the pneumatic piston 110 on the upper part of the clamp is actuated so that the collet 112 engages the head 96 of the dolly and the seat of the locking ring 100. The hydraulic cylinder 85 on the lower part of the clamp is then actuated to withdraw the piston 86 so that the locking ring slides into collar 90. In this position, the collet is locked over the head of the dolly, and further actuation of the hydraulic cylinder 85 applies a clamping force to the mould halves 12,8. In this way the full force of the clamps 80 is applied to the mould halves, and, since the lifting jacks are disengaged from the moulds, none of the clamping force is transmitted to the lifting jacks or the frame.

Liquid resin is then injected into the cavity formed by the two shells 17,18 through one or more of the apertures 23 or 27 of the shells. Relatively low pressure is used to inject the resin, for example 2-10 bar, typically 5 bar. The rigidity of the supports of the shells is sufficient to prevent distortion of the shells 17,18 during the injection of resin. The quality of the moulding is therefore maintained. When the mould has been filled with resin, the resin is allowed to cure and the lifting jacks are operated to raise the second mould half 12. The upward movement of each carriage 15a-d is transmitted to all the other carriages through the drive chains 60a-d and 70a-d, the drive shafts 65,66 and the gear wheels 62a-d, 68a-d and 73a-d. Consequently, even if the second mould half should stick to the first mould half during separation of the mould halves, the second mould half will be maintained in a horizontal orientation, thereby reducing the risk of damage to the moulding when the two mould halves are separated.

## Claims

1. Moulding equipment comprising a frame (1a-d,6a-d), first and second mould halves (8,12) mounted in the frame, means (50a-d) for moving the mould halves into and out of a closed position in which they define a mould cavity into which resin may be introduced, and means (80) for clamping the mould halves together in the closed position, characterised in that the equipment further comprises disengagement means (14,46) adapted to disengage the mould halves (8,12) from said means (50a-d) when the clamping means (80) is engaged.

2. Equipment according to Claim 1, wherein the means for moving the mould halves (8,12) comprises at least one lifting jack (50a-d) moveable into engagement with the second mould half (12) to raise it relative to the first mould half (8).

3. Equipment according to Claim 1, wherein the means for moving the mould halves comprises a plurality of lifting jacks (50a-d) for raising and lowering the second mould half (12) relative to the first mould half (8), each lifting jack being secured to the second mould half (12) at spaced locations, and a drive mechanism (60a-d) for transferring movement from one lifting jack to the other lifting jack or jacks.

4. Equipment according to Claim 3, wherein the frame comprises a plurality of upright pillars (1a-d) on each of which is mounted a carriage (15a-d) capable of travelling along the pillar, and each carriage is connected to the second mould half (12) and to a respective one of the lifting jacks (50a-d).

5. Equipment according to Claim 4, wherein the drive mechanism comprises chain drives (70a-d) mounted on the frame (1a-d,6a-d) and interconnecting the carriages (15a-d).

6. A method of operating moulding equipment, the equipment comprising first and second mould halves (8,12), means for moving the mould halves into and out of a closed position, and clamping means (80) for clamping the mould halves together in the closed position, characterised in that the mould halves are moved into a closed position in which they define a mould cavity into which resin may be introduced, the mould halves (8,12) are clamped together in the closed position and the mould halves are disengaged from said means (50a-d) when the clamping means (80) is engaged.

## Patentansprüche

1. Eine Formanlage bestehend aus einem Rahmen(1a-d, 6a-d), einer ersten und zweiten Formhälfte (8, 12), die in den Rahmen montiert sind, Vorrichtungen (50a-d) zum Bewegen der Formhälften in eine geschlossene Stellung und aus einer geschlossenen Stellung, in der sie einen Formhohlraum bilden, in den Harz geleitet werden kann und Vorrichtungen (80) zum Zusammenklemmen der Formhälften in geschlossener Stellung, dadurch gekennzeichnet, dass die Anlage ausserdem Ausrückvorrichtungen (14, 46) enthält, die die Formhälften (8, 12) von den besagten Vorrichtungen (50a-d) ausrücken lassen, wenn die Klemmvorrichtung (80) betätigt wird.

2. Eine Anlage nach Anspruch 1, in der die Vorrichtung zum Bewegen der Formhälften (8, 12) mindestens eine Hebewinde (50a-d) enthält, die auf die zweite Formhälfte (12) einwirkt, um sie auf das Niveau der ersten Formhälfte (8) zu bringen.

3. Eine Anlage nach Anspruch 1, in der die Vorrichtung zum Bewegen der Formhälften eine Vielzahl von Hebewinden (50a-d) enthält, zum Heben und Senken der zweiten Formhälfte (12) gegenüber der ersten Formhälfte (8), wobei jede Hebewinde an der zweiten Formhälfte (12) an auseinanderliegenden Stellen befestigt ist, sowie einen Antriebsmechanismus (60a-d) zur Übertragung der Bewegung von einer Hebewinde zur anderen oder zu den anderen.

4. Eine Anlage nach Anspruch 3, in der der Rahmen eine Vielzahl aufrechter Säulen (1a-d) enthält, auf die jeweils ein Schlitten (15a-d) montiert ist, der sich an der Säule entlang bewegen kann und in der jeder Schlitten mit der zweiten Formhälfte (12) und mit jeweils einer der Hebewinden (50a-d) verbunden ist.

5. Eine Anlage nach Anspruch 4, in welcher der Antriebsmechanismus Antriebsketten (70a-d) enthält, die auf den Rahmen (1a-d, 6a-d) montiert sind und die die Schlitten (15a-d) miteinander verbinden.

6. Eine Methode zum Betreiben einer Formanlage, wobei die Anlage eine erste und zweite Formhälfte (8, 12) enthält, Vorrichtungen zum Bewegen der Formhälftenin eine geschlossene und aus einer geschlossenen Stellung, sowie Klemmvorrichtungen (80) zum Zusammenklemmen der Formhälften in geschlossener Stellung, dadurch gekennzeichnet, dass die Formhälften in eine geschlossene Stellung bewegt werden, in der sie einen Formhohlraum bilden, in den Harz eingefüllt werden kann, die Formhälften werden in geschlossener Stellung zusammengeklemmt und die Formhälften werden von der besagten Vorrichtung (50a-d) ausgerückt, wenn die Klemmvorrichtung (80) betätigt ist.

## Revendications

1. Installation de moulage comprenant un châssis (1a à 1d, 6a à 6d), une première moitié de moule et une deuxième moitié de moule (8, 12) montées dans le châssis, des moyens (50a à 50d) pour déplacer les moitiés de moule jusque dans une position fermée et hors de celle-ci, position dans laquelle elles définissent une cavité de moulage dans laquelle de la résine peut être introduite, et des moyens (80) pour serrer l'une contre l'autre les moitiés de moule dans la position fermée, caractérisée par le fait que l'installation comprend en outre des moyens de dégagement (14, 46) qui sont susceptibles de dégager les moitiés de moule (8, 12) desdits moyens (50a à 50d) lorsque les moyens de serrage (80) sont en prise.

2. Installation selon la revendication 1, dans laquelle les moyens pour déplacer les moitiés de moule (8, 12) comprennent au moins un vérin de levage (50a à 50d) qui peut être déplacé de façon à venir en prise avec la deuxième moitié de moule (12) pour la lever par rapport à la première moitié de moule (8).

3. Installation selon la revendication 1, dans laquelle les moyens pour déplacer les moitiés de moule comprennent une pluralité de vérins de levage (50a à 50d) pour lever et abaisser la deuxième moitié de moule (12) par rapport à la première moitié de moule (8), chaque vérin de levage étant fixé à la deuxième moitié de moule (12) en des endroits espacés les uns des autres, et un mécanisme d'entraînement (60a à 60d) pour transmettre le déplacement d'un vérin de levage à l'autre vérin de levage ou aux autres vérins de levage.

4. Installation selon la revendication 3, dans laquelle le châssis comprend une pluralité de piliers verticaux (1a à 1d) sur chacun desquels est monté un chariot (15a à 15d) susceptible de se déplacer le long du pilier, et chaque chariot est relié à la deuxième moitié de moule (12) et à l'un des vérins de levage qui lui est associé (50a à 50d).

5. Installation selon la revendication 4, dans laquelle le mécanisme d'entraînement comprend des entraînements à chaînes (70a à 70d) qui sont montés sur le châssis (1a à 1d, 6a à 6d) et qui relient entre eux les chariots (15a à 15d).

6. Procédé pour faire fonctionner une installation de moulage, l'installation comprenant une première moitié de moule et une deuxième moitié de moule (8, 12), des moyens pour déplacer les moitiés de moule jusque dans une position fermée et depuis celle-ci, et des moyens de serrage (80) pour serrer l'une contre l'autre les moitiés de moule dans la position fermée, caractérisé par le fait que l'on déplace les moitiés de moule jusque dans une position fermée dans laquelle elles définissent une cavité de moulage dans laquelle de la résine peut être introduite, on serre l'une contre l'autre les moitiés de moule (8, 12) dans la position fermée et on dégage les moitiés de moule desdits moyens (50a à 50d) lorsque les moyens de serrage (80) sont en prise.
